# EUROPEAN PATENT SPECIFICATION

(11) **EP 3 113 608 B1**
(45) Date of publication and mention of the grant of the patent: **19.08.2020**
(21) Application number: 15716165.4
(22) Date of filing: 03.03.2015
(51) Int. Cl.: A01M 29/16

(54) **ANIMAL PROTECTION SYSTEM AND ARRANGEMENT**
SCHUTZVORRICHTUNG FÜR TIERE
DISPOSITIF DE PROTECTION POUR ANIMAUX

(30) Priority: 04.03.2014 PL 40740414
(43) Date of publication of application: 11.01.2017
(73) Proprietor: Przedsiebiorstwo Wdrozeniowo-produkcyjne Neel SP. Z.O.O, 02-836 Warszawa (PL)
(72) Inventor: STOLARSKI, Marek, 05-509 Józefoslaw (PL); SZUBSKI, Andrzej, 00-590 Warszawa (PL); BIENIASZEWSKI, Piotr, 04-434 Warszawa (PL); KOSSAK, Simona, deceased (PL)
(74) Representative: Wazynska, Miroslawa
(86) International application number: PCT/PL2015/000036
(87) International publication number: WO 2015/133917

(56) References cited:
- KR-A- 20130 002 096
- KR-A- 20130 033 054
- PL-B1- 197 370

## Description

The subject of invention consists of the animal protection system and animal protection arrangement, installed especially at railway routes.

A risk of collision of transport means with animals can take place both in land transport as well as in the air. Depending on the specifics of a given type of transport means various preventive measures are applied. In inland transport the railway routes are particularly dangerous since the traffic there is not continuous, as on most of the routes, which may dull wild animals vigilance and cause an *accident.* Another aspect of the issue, in addition to animal safety, is the safety of travellers and means of transport, especially trains. There are reports of a train derailment in the collision with a gang of wild boars, for example.

There is a well-known solution protecting the animals against collisions with trains shown in JP2013078271A patent application, consisting in locating along the railway route properly positioned emergency exits for animals.

There are well known solutions, from GB2161974A and JP2013085538A patent applications, for deterring birds at the railway tracks with the use of audio signals, including shots from the gun, initiated by appropriate sensors, for example, a laser.

The patent application CA2207361A1 shows a device for deterring large animals such as deer. The device may be located, inter alia, along the railway routes, which for deterring animals applies acoustic signals triggered by infrared motion sensors.

The patent application EP1329159A1 shows sound generator which deters animals with ultrasonic acoustic signals.

We know, from the Polish patent application no. PL391371, an arrangement for deterring animals before a passing locomotive, which is applied in forest areas and others where a danger of collision occurs of an animal crossing the track with the passing train. This arrangement is characterized by the fact that in the area of the track there is a train motion sensor coupled to the controller actuating the arrangement and processing the data on the train speed and actuating sound emitters of the subsequent section of emitter on both side of the track, so that the operation of sound emitters of the next section begins several, preferably 2-5 seconds before the front of an approaching train and lasts for dozen or so seconds, and is designed to warn the wildlife along the route of a passing train.

The patent application PL 197370 discloses the method of warning and deterrence of game animals, such as roe deer, red deer, elk, wild boars and foxes, against the danger in any area of the site, consisting in the fact that you can record the sequence of signals and warning sounds on the sound carrier of the deterring device. In addition, an arrangement for warning and deterring animals was presented, the most important feature of which is the connection of electro-acoustic transducer with acoustic power amplifier and a set of sounds and control circuit and a unit for controlling any supervised area.

The present invention is designed for its installation along the railway routes for the purpose of preventing the migration of game animals such as roe deer, red deer, elk, boar and fox across the railway tracks during the passage of a train. The solution enables optimal and safe, both for animals and for trains, fully automatic animals deterrence from the railway tracks, during the passage of trains. This solution has an additional ecological aspect.
The present invention solves the problem with
an animal protection system according to claim 1.

Preferably, the control device is connected to at least one railway interlocking system device.

Preferably, the control device is connected to the control device located at the local railway traffic control centre (CTC).

Preferably, the container of animal protection device comprises at least one control and diagnostic module, at least one power supply circuit and at least one communications circuit.

Preferably, the animal protection device comprises a memory with acoustic signals, coupled to at least one acoustic transducer, a power pack, an information transmission module, a control processor module, an D/A converter and a low-frequency power amplifier.

According to the invention,
the animal protection device is additionally connected to at least one sensor detecting the passage of a railway vehicle.

Preferably, at least two containers are connected in series to the control device, located at the railway station.

Preferably, at least two containers are connected in parallel to the control device, located at the railway station.

It is also advantageous when at least two control devices, located at the railway station, are connected in series to the control device, located at the local railway traffic control centre.

It is additionally advantageous if at least two control devices, located at the railway station, are connected in parallel to the control device, located at the local railway traffic control centre.

Preferably, the individual components of the system communicate with each other through a LCN local cable network.

Preferably, the individual components of the system communicate with each other using radio communication.

Preferably, the individual components of the system communicate with each other using a fibre optic link.

Preferably, the animal protection device is connected to a serial transmission interface arrangement, which arrangement is connected to a regeneration arrangement for the received signal and a signal detection arrangement controlled by a control unit of the optical head, wherein the regeneration arrangement for the received signal is connected to a control unit of the next optical head.

It is also advantageous for the animal protection device to be connected to a serial transmission interface arrangement via a signal conversion arrangement from one protocol of serial transmission to another protocol of serial transmission.

Preferably, the system is powered by alternative sources of energy.

Preferably, the acoustic transducer is connected to a power amplifier and the memory with acoustic signals in the animal protection device, wherein the memory with acoustic signals is connected to the internal control circuit, which in turn is connected to the device for traffic monitoring of railway vehicles. In addition, the container of the animal protection device, which is connected to at least one animal protection device, is constituted by the external control circuit connected to the internal control circuit, the main energy source and the back-up energy source.

The object of invention is shown in the drawing in which Fig. 1 shows a simplified block diagram of the system of an animal protection device UOZ, Fig. 2 - shows a block diagram of the animal protection arrangement, Fig. 3 and 4 - embodiments of animal protection system, Fig. 5 - a block diagram showing the positional relationship between the components and connection of UOZ device and KUOZ container of animal protection device, Fig. 6 - a block diagram of a fibre optic transmission arrangement.

### List of reference numerals:

- 1: UOZ animal protection device
- 2: KUOZ container of animal protection device
- 3: protection area
- 4: device at a railway station and / or at a local CTC
- 5: acoustic transducer
- 6: power amplifier
- 7: memory with acoustic signals
- 8: internal control circuit
- 9: device monitoring the rail traffic
- 10: external control circuit
- 11: main energy source
- 12: back-up energy source
- 13: external control device
- 14: Station Interlocking System SIS
- 15: local railway traffic control centre CTC
- 16: external control device
- 17: MDS control and diagnostic module
- 18: information transmission module
- 19: power pack
- 20: control processor module
- 21: D/A converter
- 22: low-frequency power amplifier
- 23: sensor detecting the passage of the rail vehicle
- 24: SSI automatic block System Station Interface
- 25: railway station
- 26: serial transmission interface arrangement
- 27: signal regeneration arrangement
- 28: signal detection arrangement
- 29: optical head control unit 1
- 30: optical head control unit 2
- 31: optical head 1
- 32: optical head 2
- 33: signal conversion arrangement for the next serial transmission signal

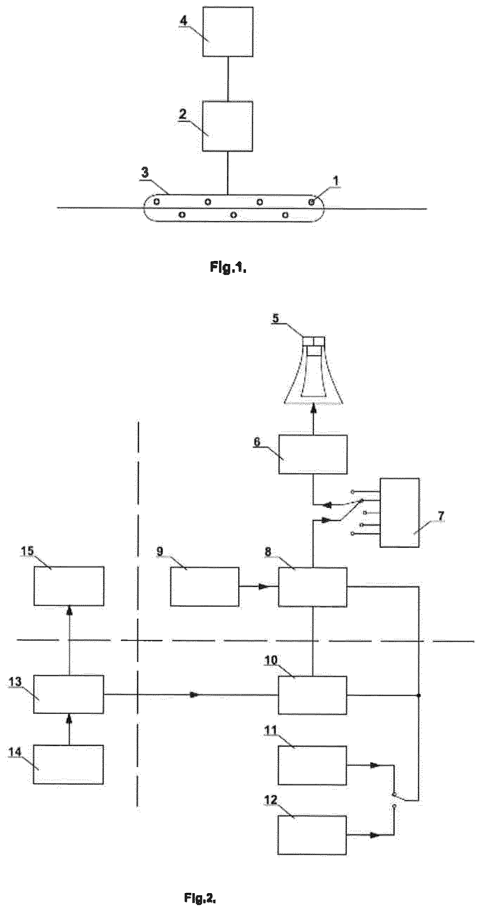

The basic elements of the animal protection system shown in the embodiment in Fig. 1 are UOZ animal protection devices 1 arranged along the track in a protection area 3 and connected to a KUOZ container 2 of the animal protection device, acting as a control and monitoring unit, which, inter alia, serves as a power supply for the UOZ device 1. KUOZ container 2 is connected to a device 4 at the railway station 25, which monitors railway traffic and performs the diagnostics on the animal protection system.

Fig. 2 shows on embodiment of animal protection arrangement, wherein the UOZ animal protection device 1 comprises an acoustic transducer 5 connected to a power amplifier 6, which is connected to a memory 7 with acoustic signals. In the memory 7 there is a sequence of sounds stored which warn against the dangers threatening the animals. The first sound in the sequence is a warning sound of a warning scream of a bird, the second - a sounds of murmurs, braking branches or brushwood and barking dogs, a third sound corresponds to yelling, struggle and wheezing of an animal being murdered, and the final step of the sequence is a moment of silence. In addition, the UOZ 1 includes an internal control circuit 8, connected to a device 9 of rail traffic monitoring and memory 7 with acoustic signals. Internal control circuit 8 of UOZ device 1 connects to the KUOZ container 2, which comprises an external control circuit 10, the main energy source 11 and a back-up energy source 12. In addition, the external control circuit 10 of KUOZ container 2 is connected to an SSI automatic block system station interface 24 (not indicated), which comprises an external control device 13 which is connected to the control device of SIS station interlocking system 14. The SSI automatic block system station interface 24 is connected to the second SSI automatic block system station interface 24, which is included in the local railway traffic control centre 15.

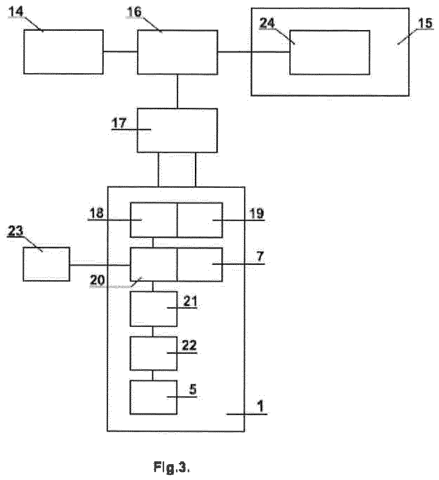

In the embodiment of the system in Fig. 3, the UOZ device 1 comprises an acoustic transducer 5, a low-frequency power amplifier 22, a D/A converter 21, a control processor module 20, a memory 7 with acoustic signals, an information transmission module 18 and a power pack 19. Control processor module 20 of UOZ 1 is connected to the sensor 23 detecting the passage of the rail vehicle, and a sensor 23 is placed along the railway tracks. The sensors 23 perform the function of traffic monitoring. They are installed at a distance of 2000 m from the protection area 3 and in fixed locations in the protection area 3 and via an interface unit are connected to UOZ device 1. The UOZ device 1 is connected to the MDS control and diagnostic module 17 of the KUOZ container 2, and the MDS module 17 is connected to an external control device 16, which respectively communicates with the SIS station interlocking system 14 and SSI automatic block system station interface 24 of the local CTC centre 15.

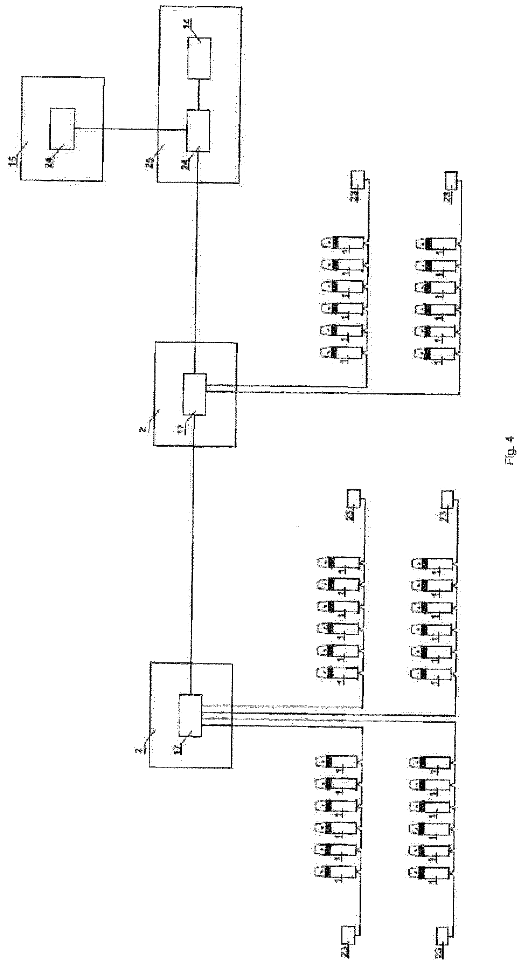

In the embodiment of animal protection system shown in Fig. 4, there are two KUOZ containers 2 and each of them is via MDS module 17 connected to 32 pieces of UOZ device 1. The KUOZ container 2 can be connected with up to four groups UOZ devices 1. The first KUOZ container 2 is connected with four groups of UOZ devices 1, wherein each group comprises 6 UOZ devices 1 which are connected in series, placed on one side of the track and connected to the sensor 23 detecting the passage of the rail vehicle. The second KUOZ container 2 is connected to two groups of UOZ devices 1, comprising also 6 pieces each of UOZ devices 1, connected in series and connected to the sensor 23 detecting the passage of the rail vehicle. The KUOZ containers 2 are connected together in series so that the second KUOZ container 2 communicates with the SSI automatic block system station interface 24, which together with the SIS control device 14 are located at the railway station 25, wherein the second SSI automatic block system station interface 24 is placed in local CTC control centre 15.

In one embodiment, the sensors 23 detecting the passage of a rail vehicle of Fig. 3 and 4 are installed in three locations along the rail route. The first and second place are points of train approaching detection on both sides of the rail track with UOZ devices 1 installed. The third place is a protection area 3, where UOZ devices 1 operate. The train approaching points of detection must be minimum 1,500 m away from the area perimeter of the protection area 3.

In another embodiment, the sensors 23 are mounted on the boundary of each group of UOZ devices 1.

In another embodiment the animal protection system comprises 32 pieces of UOZ animal protection devices 1 arranged in the protection area 3 at a railway line at a distance of 70m from each other, on either side of the track, the KUOZ container 2 includes a MDS control and diagnostic module 17, which controls four circuits of UOZ animal protection devices 1.

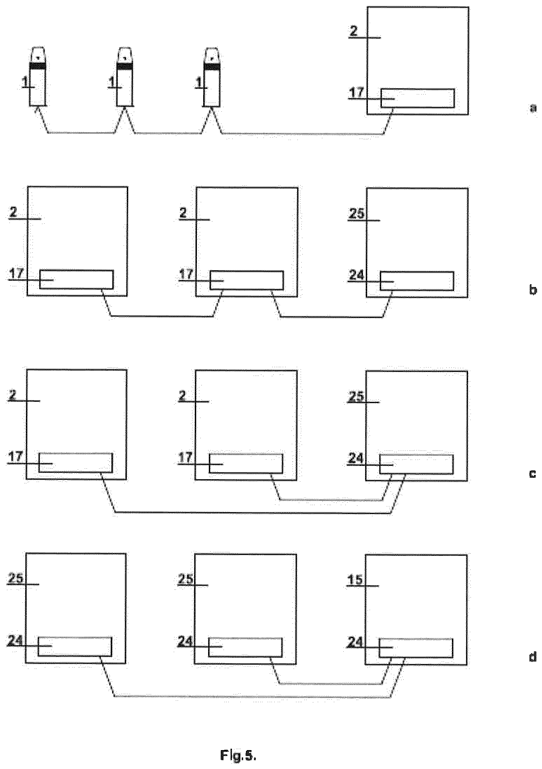

Fig. 5 illustrates the mutual positioning of the UOZ devices 1 and KUOZ containers 2. Fig. 5a shows a serial connection of three UOZ devices 1 with MDS module 17 of the KUOZ container 2. Fig. 5b shows a serial connection via MDS modules 17, of two KOUZ containers 2 with the SSI automatic block system station interface 24 located at a railway station 25. Fig. 5c is an embodiment of parallel connection via MDS modules 17, of two KUOZ containers 2 with SSI automatic block system station interface 24 located at the railway station 25. In contrast, Fig. 5d shows a parallel connection of two SSI automatic block system station interfaces 24, located at the railway stations 25 with a further SSI automatic block system station interface 24, located in the CTC local traffic control centre 15.

The MDS diagnostic and control modules 17 in further embodiments can be installed in standalone, specially designed for this purpose premises of a container type or in the existing railway premises of container type of SAZ automatic interlocking system, SSP container of automatic crossing signalling, energy facilities, telecommunication facilities, etc.

The SSI module 24 acts as the data concentrator obtained from the station automation control point, for example: automatic linear block system of SHL-12 taking into account the direction of movement of rail vehicles and automatics of axle counters system of selected crossovers in the departure head, for example: of SOL axel counter system. Information also applies to unoccupied status of station tracks and states of the positions of station semaphores.

The contacts of dependent relays of SIS interlocking system devices 14 can be attached directly to the SSI module 24.

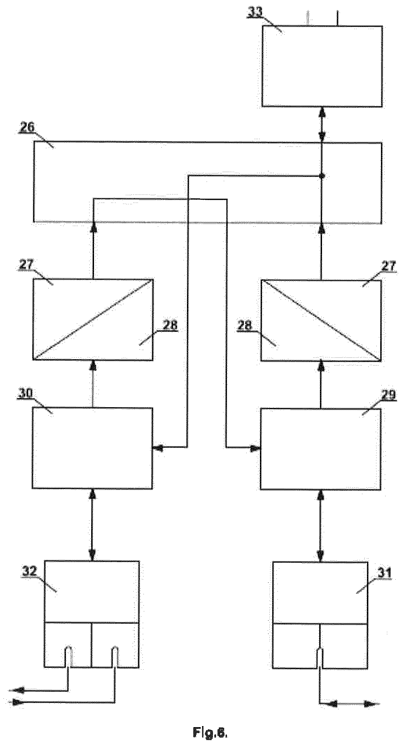

The transfer of the necessary information concerning the operation of UOZ devices 1 in the protection area 3, was carried out using a wired line connecting these UOZ devices 1 and MDS diagnostic and control modules 17. Due to the interference occurring at the place where UOZ devices are installed and caused by a contact line system for energizing railway vehicles, separating elements using optical-fibre cables were provided for in the control line of UOZ devices 1. Fig. 6 shows a block diagram of a fibre optic transmission arrangement used in the system and the animal protection arrangement. The UOZ device 1 is connected to the serial transmission interface arrangement 26 via signal conversion arrangement 33 from one protocol of serial transmission to another protocol of serial transmission, from RS 232 to RS 485 and from RS 485 to RS 232.Serial transmission interface arrangement 26 is connected with regeneration arrangements 27 for the received signal, RS 232, and the signal detection arrangement 28, RS 232, respectively of the first optical head 31 and the second optical head 32.The first optical head detection arrangement 28 31 is controlled by the control unit 29, and the second optical head 32 detection arrangement 28 is controlled by the control unit 30, of the second optical head 32.The regeneration arrangement 27 for the received signal of the first optical head 31 is connected to the control unit 30 of the optical head 32, and the received signal regenerating arrangement 27 of the second optical head 32 is connected to control unit 29 of the first optical head 31.

In each of the above embodiments of the system and the animal protection arrangement one of the basic elements of the UOZ device 1 is an acoustic transducer 5, located at the head with acoustic transducers. It can be advantageous to use two highly efficient converters of dynamic efficiency in excess of 90 dB and omnidirectional sound emission characteristic.

In one of the embodiments the UOZ devices 1 are activated automatically, just before the passage of the rail vehicle, based on the location information of each rail vehicles, obtained through a wired communication system, i.e. MDS module 17, via PT connection, taking into account the direction of travel of rail vehicles.

In another embodiment, the information from the computer communication module of the SSI interlocking system 14 are transmitted with wire communication system.

In another embodiment, the UOZ devices 1 are activated automatically, just before the passage of the rail vehicle, based on the location information of rail vehicles, obtained through an autonomous train detection system, i.e. sensor 23 detecting the passage of rail vehicles installed along with the animal protection system.

Initiation of the procedure of animal deterrence begins by sending a command to initiate a procedure from KUOZ container 2 to UOZ device 1 and consists in emitting acoustic signals by all, trackside UOZ devices 1 belonging to a single point of control.

UOZ device 1 is switched off (ending the signal emission) automatically or e.g. at the moment of train passing the UOZ device 1 or when the train stops at an isolated section of interlocking system where UOZ device 1 has been located.

Commands and any messages sent out between KUOZ containers 2 and UOZ devices 1 are transmitted by means of wire interface of serial transmission.

Message sent from the KUOZ container 2 to the SSI automatic block system station interface 24, contains information about the status of reports in the KUOZ container 2 and about switching on / switching off burglary alarm and the state and the status of each UOZ device 1.

In another embodiment, all communication in the animal protection system is carried out by means of radio communication, for example via GSM systems.

In another embodiment, a part of animal protection system components is powered by alternative energy sources such as solar panels.

In a special case, where there is a motor road runs close by the railway track it is possible to apply control with active traffic sign which makes the driver of a car limit his speed and exercise a special care when driving along this road near the rail tracks.

## Claims

1. Animal protection system emitting a sequence of warning sounds, comprising a memory with acoustic signals, a main source of energy, a back-up source of energy, a power amplifier, an internal control circuit, an external control circuit, wherein the system additionally comprises at least one container of the animal protection device, which is a control and
monitoring unit comprising at least one diagnostic and control module, connected to at least one animal protection device arranged along the track, which is an animal protection and deterring device, **characterised in that** the animal protection device (1) is additionally connected to at least one sensor (23) detecting the passage of a railway vehicle and furthermore the container (2) of the animal protection device (1) is additionally connected to at least one SSI automatic block system station interface (24).

2. The system according to claim 1 **characterised in that** the SSI automatic block system station interface (24) is connected to at least one railway interlocking system (14).

3. The system according to claim 1 **characterised in that** the SSI automatic block system station interface (24) is connected to another SSI automatic block system station interface (24), located in the local CTC control centre (15).

4. The system according to claim 1 **characterized in that** the container (2) of animal protection device (1) comprises at least one diagnostic and control module (17), at least one power supply circuit and at least one communications circuit.

5. The system according to claim 1 **characterised in that** the animal protection device (1) comprises:
a memory (7) with acoustic signals, coupled to at least one acoustic transducer (5);
a power pack (19);
an information transmission module (18);
a control processor module (20);
an D/A converter (21) and
a low-frequency power amplifier (22).

6. The system according to claim 1 **characterised in that** at least two containers (2) are connected in series or in parallel to the SSI automatic block system station interface (24), located at the railway station (25).

7. The system according to claim 1 **characterised in that** at least two SSI automatic block system station interface (24) located at the railway station (25) are connected in series to another SSI automatic block system station interface (24), located in the local CTC control centre (15).

8. The system according to claim 1 **characterised in that** at least two SSI automatic block system station interface (24) located at the railway station (25) are parallel connected to another SSI automatic block system station interface (24), located in the local CTC control centre (15).

9. The system according to claim 1 **characterised in that** the individual components of the system communicate with each other through LCN local cable network.

10. The system according to claim 1 **characterised in that** the individual components of the system communicate with each other using at least one of radio communication and wire.

11. The system according to claim 1 **characterised in that** the individual components of the system communicate with each other using fibre optic link.

12. The system according to claim 11 **characterised in that** the animal protection device (1) is connected to a serial transmission interface arrangement (26), which arrangement (26) is connected to a regeneration arrangement (27) for the received signal and a signal detection arrangement (28) controlled by a control unit (29, 30) of the optical head (31, 32), wherein the regeneration arrangement (27) for the received signal is connected to a control unit (29, 30) of the next optical head (31, 32).

13. The system according to claim 11 **characterised in that** the animal protection device (1) is connected to a serial transmission interface arrangement (26) via a signal conversion arrangement (33) from one protocol of serial transmission to another protocol of transmission.

14. The system according to any of the claims from 1 to 13 **characterised in that** the system is powered by alternative sources of energy.

15. The system according to any of the claims from 1 to 14 **characterised in that** in the animal protection device (1) the acoustic transducer (5) is connected to:
the power amplifier (6) and
the memory (7) with acoustic signals;
wherein the memory (7) with acoustic signals is connected to the internal control circuit (8) which is connected to the device (9) for traffic monitoring of railway vehicles,
and **in that the** container (2) of the animal protection device (1), which is connected to at least one animal protection device (1), is constituted by:
the external control circuit (10) connected to the internal control
circuit (8),
the main energy source (11) and
the back-up energy source (12).

## Patentansprüche

1. Ein Tierschutzsystem, das eine Folge von akustischen Warnsignalen ausgibt, mit einem Speicher für akustische Signale, einer Haupt- und einer back-up Versorgungsquelle, einem Leistungsverstärker, einem internen Steuerkreis, einem externen Steuerkreis, wobei das System zusätzlich mindestens einen Behälter der Tierschutzanlage umfasst, die als eine Steuer- und
Überwachungseinheit fungiert und mindestens ein Diagnose- und Steuermodul umfasst, das mit mindestens einer entlang der Bahnstrecke angeordneten Tierschutzanlage verbunden ist, die als eine Tierschutz- und Abschreckungsanlage fungiert, **dadurch gekennzeichnet, dass** die Tierschutzanlage (1) zusätzlich an mindestens einen Sensor (23) für die Bahnfahrterkennung angeschlossen und dass darüber hinaus der Behälter (2) der Tierschutzanlage (1) zusätzlich an mindestens eine automatische SSI-Sperrstation-Schnittstelle (24) angeschlossen ist.

2. System nach Anspruch 1 **dadurch gekennzeichnet, dass** die automatische SSI-Sperrstation-Schnittstelle (24) an mindestens ein Eisenbahnstellwerk (14) angeschlossen ist.

3. System nach Anspruch 1 **dadurch gekennzeichnet, dass** die automatische SSI-Sperrstation-Schnittstelle (24) an eine weitere automatische SSI-Sperrstation-Schnittstelle (24) angeschlossen wird, die sich in der lokalen CTC-Steuerzentrale (15) befindet.

4. System nach Anspruch 1, **dadurch gekennzeichnet, dass** der Behälter (2) der Tierschutzanlage (1) mindestens ein Diagnose- und Steuermodul (17), mindestens einen Stromversorgungskreis und mindestens einen Kommunikationskreis umfasst.

5. System nach Anspruch 1, **dadurch gekennzeichnet, dass** die Tierschutzanlage (1) folgende Baugruppen umfasst:
einen Speicher (7) für akustische Signale, der mit mindestens einem akustischen Wandler (5) gekoppelt ist;
ein Netzteil (19);
ein Modul zur Informationsübertragung (18);
ein Steuerprozessor-Modul (20);
einen D/A-Wandler (21) und
einen Niederfrequenz-Leistungsverstärker (22).

6. System nach Anspruch 1, **dadurch gekennzeichnet, dass** mindestens zwei Behälter (2) in Reihe oder parallel an die automatische SSI-Sperrstation-Schnittstelle (24) angeschlossen sind, die sich am Bahnhof (25) befindet.

7. System nach Anspruch 1 **dadurch gekennzeichnet, dass** mindestens zwei automatische SSI-Sperrstation-Schnittstellen (24) am Bahnhof (25) an eine weitere automatische SSI-Sperrstation-Schnittstelle (24) in der lokalen CTC-Steuerzentrale (15) in Reihe angeschlossen sind.

8. System nach Anspruch 1 **dadurch gekennzeichnet, dass** mindestens zwei automatische SSI-Sperrstation-Schnittstellen (24) am Bahnhof (25) an eine weitere automatische SSI-Sperrstation-Schnittstelle (24) in der lokalen CTC-Steuerzentrale (15) parallel angeschlossen sind.

9. System nach Anspruch 1, **dadurch gekennzeichnet, dass** die einzelnen Systemkomponenten über ein lokales LCN-Kabelnetz miteinander kommunizieren.

10. System nach Anspruch 1 **dadurch gekennzeichnet, dass** die einzelnen Systemkomponenten miteinander mithilfe von mindestens Funk und Draht kommunizieren.

11. System nach Anspruch 1 **dadurch gekennzeichnet, dass** die einzelnen Systemkomponenten über eine Glasfaserverbindung miteinander kommunizieren.

12. System nach Anspruch 11, **dadurch gekennzeichnet, dass** die Tierschutzanlage (1) an eine serielle Übertragungsschnittstelle (26) angeschlossen ist, wobei diese Schnittstelle (26) an eine Regenerationsanordnung (27) für das empfangene Signal und an eine Signalerkennungsanordnung (28) angeschlossen ist, die von einer Steuereinheit (29, 30) mit einem optischen Kopf (31, 32) gesteuert wird, wobei die Regenerationsanordnung (27) für das empfangene Signal an eine Steuereinheit (29, 30) für den nächsten optischen Kopf (31, 32) angeschlossen ist.

13. System nach Anspruch 11 **dadurch gekennzeichnet, dass** die Tierschutzanlage (1) an die seriellen Übertragungsschnittstelle (26) über eine Signalumwandlungsanordnung (33) von einem Protokoll der seriellen Übertragung zu einem anderen Übertragungsprotokoll angeschlossen ist.

14. System nach einem der Ansprüche von 1 bis 13 **dadurch gekennzeichnet, dass** das System mit einer alternativen Energiequelle versorgt wird.

15. System nach einem der Ansprüche von 1 bis 14 **dadurch gekennzeichnet, dass** der Schallwandler (5) der Tierschutzanlage (1) an folgende Teile angeschlossen ist:
einen Leistungsverstärker (6) und
einen Speicher (7) mit akustischen Signalen;
wobei der Speicher (7) mit akustischen Signalen an einen internen Steuerungskreis (8) angeschlossen ist, die an eine Einrichtung (9) zur Verkehrsüberwachung von Schienenfahrzeugen angeschlossen ist,
und dass der Behälter (2) der Tierschutzanlage (1), der an mindestens eine Tierschutzanlage (1) angeschlossen ist, folgende Komponenten aufweist:
einen externen Steuerungskreis (10), der an einen internen Steuerungskreis (8) angeschlossen ist,
eine Hauptversorgung (11) und
eine back-up Versorgung (12).

## Revendications

1. Système de protection des animaux émettant une séquence de sons d'avertissement, comprenant une mémoire de signaux acoustiques, une source d'énergie principale, une source d'énergie de secours, un amplificateur de puissance, un circuit de commande interne, un circuit de commande externe, dans lequel le système comprend en outre au moins un du dispositif de protection des animaux, qui est une unité de contrôle et de surveillance comprenant au moins un module de diagnostic et de contrôle, connecté à au moins un dispositif de protection des animaux disposé le long de la voie, qui est un dispositif de protection et de dissuasion des animaux, **caractérisé en ce que** le dispositif (1) de protection des animaux est en outre connecté à au moins un capteur (23) détectant le passage d'un véhicule ferroviaire et en outre le conteneur (2) du dispositif (1) de protection des animaux est en outre connecté à au moins une interface (24) du block-système automatique SSI de la station.

2. Système selon la revendication 1, **caractérisé en ce que** l'interface (24) du block-système automatique SSI de la station est connecté à au moins un block-système ferroviaire (14).

3. Système selon la revendication 1, **caractérisé en ce que** l'interface (24) du block-système automatique SSI de la station est connectée à une autre interface (24) du block-système automatique SSI de la station, situé au centre (15) de contrôle local CTC.

4. Système selon la revendication 1, **caractéristique en ce que** le conteneur (2) du dispositif (1) de protection des animaux comprend au moins un module (17) de diagnostic et de contrôle, au moins un circuit d'alimentation et au moins un circuit de communication.

5. Système selon la revendication 1, **caractérisé en ce que** le dispositif (1) de protection des animaux comprend :
une mémoire (7) de signaux acoustiques, couplée à au moins un transducteur acoustique (5) ;
un bloc (19) d'alimentation;
un module (18) de transmission d'informations;
un module de processeur de commande (20);
un convertisseur D/A (21) et
un amplificateur (22) de puissance basse fréquence.

6. Système selon la revendication 1, **caractérisé en ce que** au moins deux conteneurs (2) sont connectés en série ou en parallèle à l'interface (24) du block-système automatique SSI de la station, situé à la station ferroviaire (25).

7. Système selon la revendication 1, **caractérisé en ce que** au moins deux interfaces (24) du block-système automatique SSI de la station situés à la station ferroviaire (25) sont connectés en série à une autre interface (24) du block-système automatique SSI de la station, situé dans le centre (15) de contrôle local CTC.

8. Système selon la revendication 1, **caractérisé en ce qu'**au moins deux interfaces (24) du block-système automatique SSI de la station situés à la station ferroviaire (25) sont connectés en parallèle à une autre interface (24) du block-système automatique SSI de la station, situé dans le centre (15) de contrôle local CTC.

9. Système selon la revendication 1, **caractérisé en ce que** les composants individuels du système communiquent entre eux via le réseau câblé local LCN.

10. Système selon la revendication 1, **caractérisé en ce que** les composants individuels du système communiquent entre eux en utilisant au moins l'un des moyens de communication radio ou filaire.

11. Système selon la revendication 1, **caractérisé en ce que** les composants individuels du système communiquent entre eux à l'aide d'une liaison à fibre optique.

12. Système selon la revendication 11, **caractérisé en ce que** le dispositif (1) de protection des animaux est connecté à un agencement (26) d'interfaces de transmission série, lequel agencement (26) est connecté à un agencement de régénération (27) pour le signal reçu et à un agencement de détection de signal (28) commandé par une unité de commande (29, 30) de la tête optique (31, 32), dans lequel l'agencement de régénération (27) pour le signal reçu est connecté à une unité de commande (29, 30) de la tête optique suivante (31, 32).

13. Système selon la revendication 11, **caractérisé en ce que** le dispositif (1) de protection des animaux est connecté à un agencement (26) d'interfaces de transmission série via un dispositif de conversion de signal (33) d'un protocole de transmission série à un autre protocole de transmission.

14. Système selon l'une quelconque des revendications 1 à 13, **caractérisé en que** le système est alimenté par des sources d'énergie alternatives.

15. Système selon l'une quelconque des revendications 1 à 14, **caractérisé en que** dans le dispositif (1) de protection des animaux, le transducteur acoustique (5) est connecté:
à l'amplificateur (6) de puissance et
à la mémoire (7) de signaux acoustiques;
dans lequel la mémoire (7) de signaux acoustiques est connectée au circuit (8) de commande interne qui est connecté au dispositif (9) pour surveiller du trafic des véhicules ferroviaires,
et **en ce que** le conteneur (2) du dispositif (1) de protection des animaux, qui est connecté à au moins un dispositif (1) de protection des animaux, est constitué par:
le circuit (10) de commande externe connecté au circuit (8) de commande interne,
la source (11) d'énergie principale et
la source (12) d'énergie de secours.
